(19) **Europäisches Patentamt**

**European Patent Office**

**Office européen des brevets**

(11) **EP 1 156 308 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
*G01G 3/14* (2006.01)    *G01G 23/10* (2006.01)

(21) Anmeldenummer: **01109838.1**

(22) Anmeldetag: **23.04.2001**

(54) **Elektronischer Wägeaufnehmer**

Electronic weighing sensor

Détecteur de poids électronique

(84) Benannte Vertragsstaaten:
**AT BE CH CY DE DK ES FI FR GB GR IE IT LI LU MC NL PT SE TR**

(30) Priorität: **19.05.2000 DE 10024986**

(43) Veröffentlichungstag der Anmeldung:
**21.11.2001 Patentblatt 2001/47**

(73) Patentinhaber: **SARTORIUS AG**
**37075 Göttingen (DE)**

(72) Erfinder:
• **Martens, Jörg-Peter, Dr.**
**37120 Bovenden (DE)**
• **Klauer, Alfred, Dr.**
**37083 Göttingen (DE)**

(56) Entgegenhaltungen:
| | |
|---|---|
| **DE-A- 4 001 614** | **US-A- 4 039 036** |
| **US-A- 4 615 403** | **US-A- 4 817 026** |
| **US-A- 5 062 492** | **US-A- 5 780 777** |

• **DATABASE WPI Section EI, Week 8603 Derwent Publications Ltd., London, GB; Class S02, AN 1986-020105 XP002175517 & SU 1 165 897 A (NONBLACK SOI AGRIC), 7. Juli 1985 (1985-07-07)**

**Beschreibung**

Die Erfindung bezieht sich auf einen elektronischen Wägeaufnehmer mit einer digitalen Signalverarbeitungseinheit, die zumindest einen Filter mit Tiefpasscharakteristik enthält, mit dessen Hilfe aus dem Ausgangssignal des Wägeaufnehmers der Gleichanteil ermittelt und daraus das Wägeergebnis abgeleitet wird.

Wägeaufnehmer dieser Art sind allgemein bekannt. Das Tiefpassfilter dient dabei dazu, die Wechselanteile, die bei Erschütterungen und Vibrationen des Aufstellortes des Wägeaufnehmers dem Ausgangssignal des Wägeaufnehmers überlagert sind, zu unterdrücken. Trotz dieser Maßnahme sind die Messergebnisse von Wägeaufnehmern und daraus aufgebauten Waagen bei Erschütterungen/Vibrationen des Aufstellortes im allgemeinen deutlich schlechter reproduzierbar als bei Messungen an ruhigen Aufstellorten.

Um das Verhalten von Wägeaufnehmern und Waagen bei unruhigem Aufstellort zu verbessern, ist es z. B. aus der US 5 789 713 bekannt, einen zweiten, konstant belasteten Wägeaufnehmer vorzusehen, aus dessen Ausgangssignal ein Korrektursignal für den eigentlichen (Mess-) Wägeaufnehmer hergeleitet wird. -

Der mechanische und elektronische Aufwand durch den zweiten Wägeaufnehmer ist jedoch erheblich.

In ähnlicher Weise ist es aus der DE 40 01 614 A1 bekannt, statt eines zweiten, konstant belasteten Wägeaufnehmers wenigstens einen Beschleunigungsaufnehmer vorzusehen, der ein Korrektursignal zur Beeinflussung des Messergebnisses abgibt. - In beiden Fällen muss das Korrektursignal jedoch phasenrichtig vom Signal des (Mess-) Wägeaufnehmers subtrahiert werden, um eine Störungskorrektur zu erreichen. Diese phasenrichtige Subtraktion lässt sich jedoch nur in einem begrenzten Frequenzband erreichen. Am oberen Ende dieses Frequenzbandes werden die Phasenverschiebungen immer größer und differieren zwischen Messpfad und Korrekturpfad, sodass sich im ungünstigsten Fall eine Addition der Signale ergibt - und damit eine Verstärkung - statt einer Subtraktion - und damit Auslöschung. Dies gilt insbesondere für den Fall des Beschleunigungsaufnehmers als Korrekturgeber, da das mechanisch ganz anders aufgebaute System des Beschleunigungsaufnehmers ganz andere Eigenfrequenzen aufweist als der Wägeaufnehmer.

Weiterhin ist es aus der US 5062492 bekannt, die im Ausgangssignal des Wägeaufnehmers hinter dem Tiefpassfilter noch vorhandenen Wechselspannungsanteile auf ihre Frequenz hin zu untersuchen. Die Bestimmung des Wägeergebnisses mittels eines Sample-and-Hold -Verstärkers mit nachgeschaltetem A/D -Wandler und Mikroprozessor wird dann mit dieser Frequenz synchronisiert, um für diese Frequenz eine besonders hohe Störunterdrückung zu erzielen. - Dieses Verfahren funktioniert jedoch nur bei Störungen, bei denen eine Frequenz dominiert - beispielsweise eine Eigenfrequenz des Wägeaufnehmers. Bei äußeren Störungen mit verschiedenen überlagerten Frequenzen führt dieses Verfahren zu dauernd wechselnden Abtastfrequenzen und funktioniert nicht mehr.

Aufgabe der Erfindung ist es daher, das Verhalten eines Wägeaufnehmers der eingangs genannten Art bei Erschütterungen und Vibrationen des Aufstellortes zu verbessern, ohne den Aufwand eines zweiten Wägeaufnehmers bzw. eines Beschleunigungsaufnehmers zur Korrektur zu benötigen.

Erfindungsgemäß wird dies dadurch erreicht, dass von der digitalen Signalverarbeitungseinheit zusätzlich durch ein Hochpassfilter ein von der Amplitude der Erschütterungen des Wägeaufnehmer abhängiges Signal ermittelt wird, das gleichgerichtet und geglättet wird und somit proportional zum mittleren Wechselanteil im Ausgangssignal des Wägeaufnehmers ist und über eine Quadriereinheit einem Rechenwerk zugeführt wird, wobei im Rechenwerk ein korrigiertes Ausgangssignal (m') aus dem Signal des Tiefpassfilters und dem Signal der Quadriereinheit errechnet wird.

Dieser Lösungsweg basiert auf der Erkenntnis der Erfinder, dass die schlechtere Reproduzierbarkeit von Wägeaufnehmern an unruhigen Aufstellorten nicht nur durch eine mangelnde Unterdrückung des Wechselanteils im Ausgangssignal des Wägeaufnehmers verursacht wird; ein wesentlicher Beitrag kommt vielmehr dadurch zustande, dass je nach Amplitude und Frequenzbereich des Wechselanteils auch der Gleichanteil im Ausgangssignal des Wägeaufnehmers beeinflusst wird. Eine stärkere Unterdrückung des Wechselanteils im Ausgangssignal des Wägeaufnehmers bringt daher allein keine ausreichende Verbesserung des Erschütterungsverhaltens des Wägeaufnehmers, es muss zusätzlich die erfindungsgemäße Korrektur des Gleichanteils durchgeführt werden.

Die Ursache dieser Beeinflussung des Gleichanteils kann man sich an drei Beispielen anschaulich klarmachen:

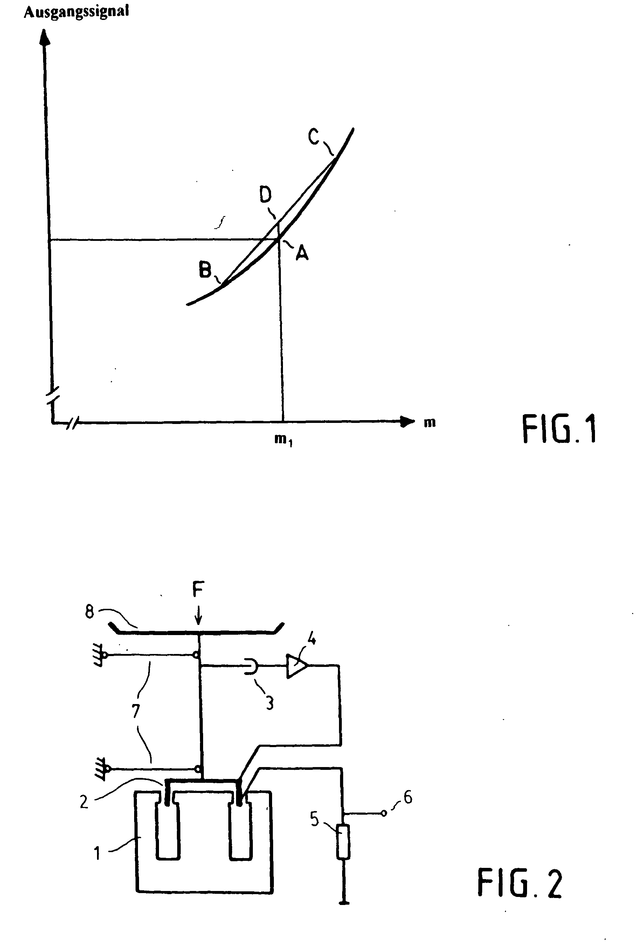

- Bei Wägeaufnehmern mit nichtlinearer Kennlinie, wie es - übertrieben - in Figur 1 dargestellt ist, gehört bei ruhigem Aufstellort zur Belastung $m_1$ das dem Punkt A entsprechende Ausgangssignal. Bei unruhigem Aufstellort schwankt dagegen das Ausgangssignal zwischen den Extrempunkten B und C auf der nichtlinearen Kennlinie B-A-C. Der Gleichanteil dieses Ausgangssignals liegt dabei je nach Amplitudenspektrum der Erschütterungen irgendwo zwischen den Punkten A und D. Dadurch ergibt sich also auch bei vollständiger Unterdrückung des Wechselanteils im Ausgangssignal aufgrund der Nichtlinearität der Kennlinie eine Veränderung des Gleichanteils, die durch die erfindungsgemäßen elektronischen Komponenten rückgängig gemacht wird.

- Bei Wägeaufnehmern nach dem Prinzip der elektromagnetischen Kraftkompensation, wie sie schematisch in Figur 2 dargestellt sind, befindet sich eine stromdurchflossene Spule 2 im Magnetfeld eines Permanentmagneten 1. Der Strom durch die Spule 2 wird durch einen Lageindikator 3 und einen nachgeschalteten Regelverstärker 4 so geregelt, dass die elektromagnetisch erzeugte Kraft genauso groß ist, wie die zu messende Kraft F. Die Größe dieses Stromes wird an einem Messwiderstand 5 abgegriffen und als Ausgangssignal des Wägeaufnehmers am Ausgang 6 zur Verfügung gestellt. Der quantitative Zusammenhang zwischen dem Magnetfeld B, dem Strom I und der erzeugten Kraft F ist bekanntlich:

$$F \approx B \cdot I \qquad (1)$$

Die Spule 2 ist dabei zur Erzielung eines optimalen Wirkungsgrades so positioniert, dass sie sich an der Stelle des maximalen Magnetfeldes des Permanentmagneten 1 befindet. Wird die Spule nun durch Vibrationen des Untergrundes zu Schwingungen angeregt, so befindet sie sich zeitweise außerhalb des Magnetfeldmaximums in einem Bereich mit geringerem Magnetfeld. Im zeitlichen Mittel ist das Magnetfeld B in Gleichung (1) dann also geringer als bei ruhigem Aufstellort, bei dem sich die Spule 2 immer im Magnetfeldmaximum befindet. Dies hat gemäß Gleichung (1) zur Folge, dass im zeitlichen Mittel ein größerer Strom I zur Erzeugung der gleichen Kraft F benötigt wird. - Auch in diesem Beispiel verändert sich also der Gleichanteil bei Erschütterungen/Vibrationen, sodass wieder neben der Unterdrückung des Wechselanteils der Gleichanteil korrigiert werden muss, um das stabile und exakte Ergebnis zu erhalten.

• Falls bei dem eben beschriebenen Wägeaufnehmer gemäß Figur 2 die Kennlinie des Lageindikators 3 unsymmetrisch nichtlinear ist, so verschiebt sich bei Vibrationen die mittlere Einschwinglage, wie es anhand von Figur 1 bereits verdeutlicht wurde. Diese Änderung der mittleren Einschwinglage führt einmal zu einer Änderung des effektiven Magnetfeldes am Ort der Spule - wie im zweiten Beispiel dargelegt -, zum anderen zu einer leichten Auslenkung der Parallelführung 7 für die Waagschale 8 und die Spule 2. Wird die Parallelführung durch Federgelenke realisiert, führt dies zu einer vertikalen Federkraft, die den Gleichanteil im Wägesignal verändert.

Auch andere, hier nicht näher beschriebene Ursachen können zu einer Verfälschung des Gleichanteils im Wägesignal führen, z. B. nichtlineare Verstärker oder nichtlineare Übersetzungshebel. Selbstverständlich sind alle beschriebenen Effekte klein und wirken sich daher erst bei hohen Auflösungen des Wägeaufnehmers aus.

Vorteilhafte Ausgestaltungen ergeben sich aus den abhängigen Ansprüchen.

Die Benutzung eines Hochpassfilters zur Ermittlung des erschütterungsabhängigen Wechselanteils im Ausgangssignal eines Wägeaufnehmers und die Ansteuerung eines Anzeigeelementes oder einer Abdrucksperre, falls dieser Wechselanteil einen vorgegebenen Grenzwert überschreitet, ist im Waagenbau allgemein bekannt und beispielsweise in der DE 23 23 200 beschrieben. Eine Beeinflussung des Gleichanteils im Ausgangssignal des Wägeaufnehmers erfolgt jedoch gemäß dem Stand der Technik nicht.

Die Erfindung wird im folgenden anhand der schematischen Figuren beschrieben. Dabei zeigt:

Figur 3 ein Blockschaltbild einer ersten Ausgestaltung des Wägeaufnehmers,
Figur 4 ein Blockschaltbild einer zweiten Ausgestaltung des Wägeaufnehmers,
Figur 5 ein Blockschaltbild einer dritten Ausgestaltung des Wägeaufnehmers und
Figur 6 ein Blockschaltbild einer vierten Ausgestaltung des Wägeaufnehmers.

Figur 1 und 2 wurden bereits in der Beschreibungseinleitung erläutert.

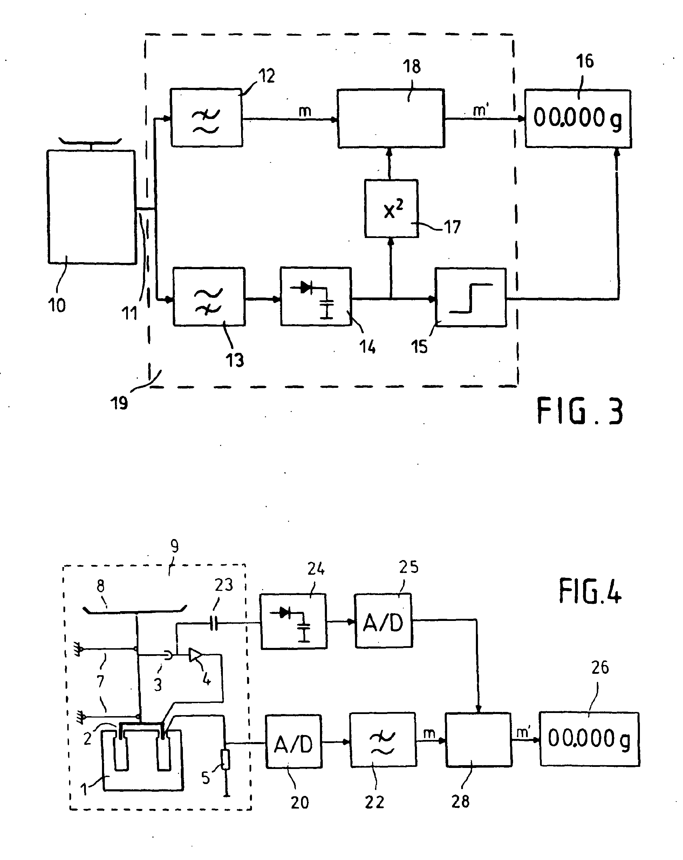

Das Blockschaltbild in Figur 3 zeigt einen Wägeaufnehmer 10, an dessen Ausgang 11 sowohl ein Tiefpass 12 als auch ein Hochpass 13 angeschlossen sind. Der Tiefpass 12 liefert an seinem Ausgang ein Signal m , das proportional zum Gleichanteil im Ausgangssignal des Wägeaufnehmers 10 ist und damit im Wesentlichen proportional zur Belastung des Wägeaufnehmers 10. Der Hochpass 13 liefert an seinem Ausgang ein Signal, das proportional zum Wechselanteil im Ausgangssignal des Wägeaufnehmers 10 ist und damit bei konstanter Belastung des Wägeaufnehmers proportional zu den Erschütterungen des Wägeaufnehmers. Dieses Signal wird gleichgerichtet und leicht geglättet (Block 14, wobei die zeichnerische Darstellung mit einer Diode und einem Kondensator dies allgemein symbolisieren soll und nicht eingeschränkt auf Einweg-Spitzengleichrichtung verstanden werden soll,) und ist somit proportional zum mittleren Wechselanteil im Ausgangssignal des Wägeaufnehmers 10. Es wird einerseits gemäß dem Stand der Technik einem Schwellwertvergleicher 15 zugeführt und steuert damit bei Unterschreiten Schwellwertes das Aufleuchten des Grammsymbols "g" in der Anzeige 16. Andererseits wird das Signal über eine Quadriereinheit 17 dem Rechenwerk 18 zugeführt. Im Rechenwerk 18 wird das korrigierte Ausgangssignal m' aus dem (unkorrigierten) Eingangssignal m (vom Tiefpass 12) und dem Korrektursignal $x^2$ von der Quadriereinheit 17 z. B. nach folgender Formel errechnet:

$$m' = m + (a \cdot m + b) \cdot x^2 \qquad (2)$$

Bei ruhigem Aufstellort, also $x^2 = 0$, wird m' = m. Bei unruhigem Aufstellort wird dem Gleichanteil m im Ausgangssignal des Wägeaufnehmers ein Summand addiert, der proportional zum Quadrat des Wechselanteiles x ist. Der Faktor b korrigiert dabei belastungsunabhängige Effekte, während der Faktor a Effekte korrigiert, die mit der Belastung des Wägeaufnehmers steigen. - Die Größe von a und b und ihr Vorzeichen richtet sich nach den physikalischen Ursachen des Effektes und damit nach dem Verhalten des individuellen Wägeaufnehmers. Bei dem Wägeaufnehmer mit nichtlinearer Kennlinie gemäß Beispiel 1 und Figur 1 der Beschreibungseinleitung richten sich a und b nach dem Vorzeichen und dem Verlauf der Kennlinienkrümmung; im gezeichneten Beispiel von Figur 1 und unter der Voraussetzung, dass die Krümmung der Kennlinie konstant - also unabhängig von der Belastung des Wägeaufnehmers - ist, ist a = 0 und b negativ. Bei dem Wägeaufnehmer nach den Prinzip der elektromagnetischen Kraftkompensation gemäß Beispiel 2 und Figur 2 der Beschreibungseinleitung, bei dem der Effekt durch den Abfall des Magnetfeldes verursacht wird, ist b = 0 und a negativ. Beim dritten Beispiel des nichtlinearen Lageindikators sind sowohl a als auch b ungleich Null: die Größe von a wird durch den Abfall des Magnetfeldes bestimmt, die Größe und das Vorzeichen von b durch die Nichtlinearität des Lageindikators und durch die Größe der Federkonstanten der Parallelführung.

Die Größe der Korrekturfaktoren a und b muss für jede Wägeaufnehmer-Bauart entsprechend dem individuellen Verhalten ermittelt und festgelegt werden. Genauso ist die in Gleichung (2) und in Figur 3 vorgesehene alleinige Benutzung von $x^2$, also dem quadrierten Wechselanteil, im Allgemeinen zutreffend, es kann aber in speziellen Fällen auch eine abweichende Abhängigkeit von der Größe des Wechselanteils auftreten, die durch eine andere Korrekturgleichung ebenfalls korrigiert werden kann.

Der korrigierte Wert m' wird dann vom Rechenwerk 18 an die Anzeigeeinheit 16 weitergegeben.

In der vorstehenden Beschreibung sind alle anderen üblichen Rechenvorgänge mit dem Ausgangssignal des Wägeaufnehmers, wie z. B. das Tarieren oder das Justieren, weggelassen, sie werden selbstverständlich zusätzlich durchgeführt.

Die im Vorstehenden zur Erläuterung einzeln beschriebenen Komponenten der Schaltung werden üblicherweise durch eine einzige digitale Signalverarbeitungseinheit 19 in Form eines Mikroprozessors realisiert. Auch die Filter 12 und 13 werden vorteilhafterweise als Digitalfilter ausgeführt und innerhalb der digitalen Signalverarbeitungseinheit 19 realisiert. - In Figur 3 sind alle Komponenten, die vom Mikroprozessor der digitalen Signalverarbeitungseinheit 19 realisiert sein können, gestrichelt eingerahmt.

Wenn die Filter 12 und 13 Digitalfilter sind, muss das Ausgangssignal des Wägeaufnehmers natürlich digital sein oder durch einen Analog/Digital-Wandler, der dann in Figur 3 als Bestandteil des Wägeaufnehmers 10 angesehen werden soll, digitalisiert sein. Die Filter 12 und 13 (und die Gleichrichtung und Glättung 14) können natürlich auch analoge Filter sein, die direkt an das analoge Ausgangssignal des Wägeaufnehmers 10 angeschlossen sind. Auch die Quadrierung 17 und das Rechenwerk 18 können analog realisiert sein und erst vor der digitalen Anzeigeeinheit 16 müsste der korrigierte Wert m' digitalisiert werden. Üblicherweise wird aber heutzutage zumindest das Rechenwerk 18 digital arbeiten, sodass hinter dem analogen Tiefpass 12 und hinter dem analogen Glättungsbaustein 14 bzw. hinter dem Quadrierbaustein 17 je ein Analog/Digital-Wandler eingebaut werden muss.

Eine zweite Ausgestaltung des Wägeaufnehmers ist in Figur 4 gezeigt. Der Wägeaufnehmer 9 arbeitet nach dem allgemein bekannten und schon kurz erläuterten Prinzip der elektromagnetischen Kraftkompensation: Die Spule 2 befindet sich im Luftspalt eines Permanentmagneten 1; der Strom I durch die Spule 2 wird mittels eines Lageindikators 3 und eines Regelverstärkers 4 so geregelt, dass die elektromagnetisch erzeugt Kraft genauso groß ist, wie die vom Wägegut auf der Waagschale 8 erzeugt Kraft. Die Waagschale 8 wird dabei durch eine Lenkerparattetführung 7 geführt. Am Messwiderstand 5 wird die belastungsproportionale Ausgangsspannung abgenommen, digitalisiert (Analog/Digital-Wandler 20) und einem digitalen Tiefpass 22 zugeführt. Das erschütterungsabhängige Signal wird direkt am Lageindikator 3 über einen Kondensator 23 abgenommen. Dieses Signal wird gleichgerichtet, geglättet (Block 24) und digitalisiert (Analog/Digital-Wandler 25) und stellt das Korrektursignal x dar. Im Rechenwerk 28 wird die Korrektur gemäß Gleichung (2) durchgeführt, wobei das Bilden von $x^2$ mit im Rechenwerk erfolgt.

Der korrigierte Wert m' wird wieder in einer Anzeigeeinheit 26 angezeigt. - Diese Ausgestaltung unterscheidet sich von der ersten Ausgestaltung gemäß Figur 3 im Wesentlichen dadurch, dass das erschütterungsabhängige Signal direkt vom Lageindikator 3 abgegriffen wird und nicht aus dem Ausgangssignal des Wägeaufnehmers hergeleitet wird. Dadurch wird der frequenzabhängige Einfluss des Regelverstärkers 4 vermieden und das erschütterungsabhängige Signal direkt dort abgegriffen, wo bei Wägeaufnehmern nach dem Prinzip der elektromagnetischen Kraftkompensation auch die Ursache des Effektes liegt: Am Lageindikator, der die Lage der Spule 2 detektiert und damit direkt die Abweichung der Lage der Spule vom maximalen magnetischen Feld. Treten an der Spule 2 z. B. bei gewissen Frequenzen Resonanzüberhöhungen auf, so werden diese vom Lageindikator direkt detektiert und nicht durch das PID-Regelverhalten des Regelverstärkers 4 teilweise unterdrückt und erst dann im Ausgangssignal des Wägeaufnehmers detektiert.

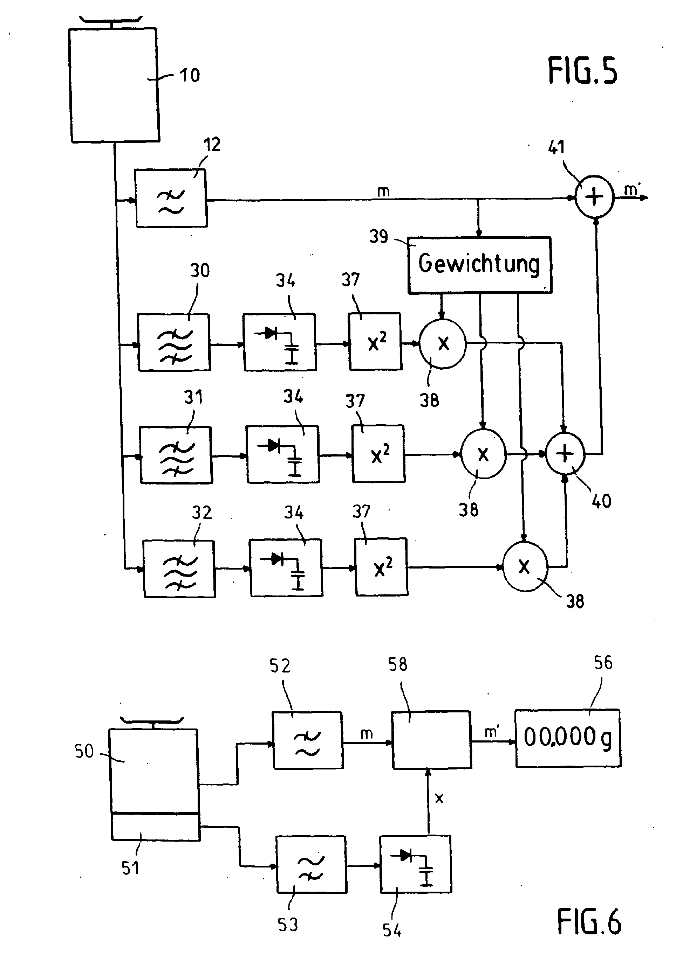

In Figur 5 ist eine dritte Ausgestaltung des Wägeaufnehmers gezeigt. Das Ausgangssignal des Wägeaufnehmers 10, das wieder als digital vorausgesetzt wird, wird einem Tiefpass 12 und drei Bandfiltern 30, 31 und 32 zugeführt. Jedes Bandfilter ist auf eine der Resonanzfrequenzen des Wägeaufnehmers abgestimmt und filtert diesen Frequenzbereich aus dem Ausgangssignal des Wägeaufnehmers heraus. Jedem Bandfilter ist ein Gleichrichter- und Glättungsmodul 34 nachgeschaltet und anschließend je eine Quadriereinheit 37. Das Ausgangssignal dieser Quadriereinheiten ist dann das erschütterungsabhängige Signal, bezogen auf den jeweiligen Frequenzbereich. Dieses Signal $x^2$ wird in den folgenden Multiplizierern 38 gemäß Gleichung (2) jeweils mit dem Koeffizienten (a m+b) multipliziert. Die Koeffizienten (a m + b) werden dabei durch die mit "Gewichtung" bezeichnete Speicher- und Multiplizierelektronik 39 zur Verfügung gestellt. Bei den gezeichneten drei Bandpässen sind in der Elektronik 39 also drei Koeffizienten a und drei Koeffizienten b gespeichert. Die Ergebnisse der Multiplizierbausteine 38 werden in einem Addierer 40 aufsummiert und diese Summe wird im Addierer 41 zum Signal m hinzuaddiert. - Diese Schaltung arbeitet also genauso wie die Schaltung gemäß Figur 3, sie kann nur die Korrektur getrennt für drei verschiedene Frequenzbereiche durchführen und so verschiedenes Verhalten des Wägeaufnehmers in den verschiedenen Frequenzbereichen korrigieren. - Die Zahl von drei Bandfiltern und damit von drei Frequenzbereichen ist selbstverständlich nur beispielhaft; jede andere Anzahl ist auch möglich. Genauso ist Gleichung (2) nur eine beispielhafte Verknüpfung von m' und m . Im allgemeinen Fall gilt:

$$m' = m + \sum_i f_i\left(a_i, b_i, m, x_i\right) \qquad (3)$$

wobei $f_i$ eine beliebige Funktion ist und der Index i sich auf die verschiedenen Frequenzbereiche bezieht. Im Beispiel von Figur 5 ist also i = 1...3. Die Koeffizienten $a_i$ und $b_i$ stellen wägeaufnehmerspezifische Konstanten dar. Die Abhängigkeit von den einzelnen $x_i$ wird in vielen Fällen quadratisch sein - wie in Gleichung (2) angesetzt -, es ist jedoch auch jede andere Anhängigkeit möglich.

In Figur 6 ist eine vierte Ausgestaltung des erfindungsgemäßen Wägeaufnehmers gezeigt. Das Ausgangssignal des eigentlichen Wägeaufnehmers 50 wird wieder einem Tiefpassfilter 52 zugeführt und liefert das Signal m. Das erschütterungsabhängige Signal wird von einem Beschleunigungssensor 51 hergeleitet, der fest mit dem Fußpunkt des Wägeaufnehmers 50 verbunden ist. Je nach Aufbau des Beschleunigungssensors 51 wird das Ausgangssignal direkt einem Gleichrichter- und Glättungsmodul 54 zugeführt (wenn der Beschleunigungssensor aufgrund seiner Bauart sowieso nur Wechselbeschleunigungen detektiert), oder unter Zwischenschaltung eines Hochpasses 53 (wenn der Beschleunigungssensor 51 auch Gleichkomponenten erfasst oder sein Frequenzverhalten deutlich von dem benötigten Frequenzverhalten abweicht). Das so gewonnene Korrektursignal x verändert in der schon beschriebenen Weise in der Recheneinheit 58 den Gleichanteil m vom Tiefpass 52. Das Ergebnis m' wird wieder in einer Anzeigeeinheit 56 angezeigt. - Das bei den anderen Ausgestaltungen zum analogen oder digitalen Filter und zu der Korrekturgleichung Gesagte gilt in dieser Ausgestaltung in gleicher Weise.

### Patentansprüche

1.  Elektronischer Wägeaufnehmer (10,9,50) mit einer digitalen Signalverarbeitungseinheit (19), die zumindest einen Filter mit Tiefpasscharakteristik (12,22,52) enthält, mit dessen Hilfe aus dem Ausgangssignal des Wägeaufnehmers (10,9,50) der Gleichanteil (m) ermittelt und daraus das Wägeergebnis abgeleitet wird, **dadurch gekennzeichnet, dass** von der digitalen Signalverarbeitungseinheit (19) zusätzlich durch ein Hochpassfilter (13,53) ein von der Amplitude der Erschütterungen des Wägeaufnehmers (10,9,50) abhängiges Signal ermittelt wird, das gleichgerichtet und geglättet wird und somit proportional zum mittleren Wechselanteil im Ausgangssignal des Wägeaufnehmers (10,9,50) ist und über eine Quadriereinheit (17,28,37,58) einem Rechenwerk (18,28,38...41,58) zugeführt wird, wobei im Rechenwerk (18,28,38...41,58) ein korrigiertes Ausgangssignal (m') aus dem Signal des Tiefpassfilters (12,22,52) und dem Signal der Quadriereinheit (17,28,37,58) errechnet wird.

2.  Elektronischer Wägeaufnehmer nach Anspruch 1, **dadurch gekennzeichnet, dass** das von der Amplitude der Erschütterungen abhängige Signal aus dem Ausgangssignal des Wägeaufnehmers (10) ermittelt wird.

3.  Elektronischer Wägeaufnehmer nach Anspruch 1, der nach dem Prinzip der elektromagnetischen Kraftkompensation arbeitet, **dadurch gekennzeichnet, dass** das von der Amplitude der Erschütterungen abhängige Signal aus dem Ausgangssignal des Lageindikators (3) des Regelkreises der elektromagnetischen Kraftkompensation hergeleitet wird.

4.  Elektronischer Wägeaufnehmer nach Anspruch 1, **dadurch gekennzeichnet, dass** der Wägeaufnehmer (50) einen integrierten Beschleunigungssensor (51) enthält und dass das von der Amplitude der Erschütterungen abhängige Signal aus dem Ausgangssignal des Beschleunigungssensors (51) hergeleitet wird.

**5.** Elektronischer Wägeaufnehmer nach einem der Ansprüche 1 - 4, **dadurch gekennzeichnet, dass** das Rechenwerk (18, 28, 38...41, 58) eine nichtlineare Kennlinie nachbilden kann.

**6.** Elektronischer Wägeaufnehmer nach einem der Ansprüche 1 - 5, **dadurch gekennzeichnet, dass** das Rechenwerk (18, 28, 38...41, 58) eine frequenzabhängige Kennlinie nachbilden kann.

**7.** Elektronischer Wägeaufnehmer nach einem der Ansprüche 1 - 6, **dadurch gekennzeichnet, dass** das von der Amplitude der Erschütterungen abhängige Signal in mehrere Frequenzbereiche zerlegt wird (Bandfilter 30...32) und den jeweiligen Frequenzbereichen unterschiedliche Kennlinien zugeordnet sind.

**8.** Elektronischer Wägeaufnehmer nach einem der Ansprüche 5-7, **dadurch gekennzeichnet, dass** die Kennlinie(n) zusätzlich vom Ausgangssignal des Filters mit Tiefpasscharakteristik (12, 22, 52) beeinflusst wird/werden.

**9.** Elektronischer Wägeaufnehmer nach einem der Ansprüche 1-8, **dadurch gekennzeichnet, dass** alle Filter (12, 13, 22, 30, 31, 32, 52, 53) digitale Filter sind und innerhalb der digitalen Signalverarbeitungseinheit (19) realisiert sind und dass auch das Rechenwerk (18,28,38...41,58) durch digitale Komponenten bzw. Programmteile innerhalb der digitalen Signalverarbeitungseinheit (19) realisiert ist.

**Claims**

**1.** Electronic weighing machine (10, 9, 50) with a digital signal processing unit (19), which contains at least one filter with a low-pass characteristic (12, 22, 52), with the help of which the direct component (m) is ascertained from the output signal of the weighing machine (10, 9, 50) and the weighing result derived therefrom, **characterised in that** a signal dependent on the amplitude of the vibrations of the weighing machine (10, 9, 50) is additionally determined by the digital signal processing unit (19) by way of a high-pass filter (13, 53), which signal is rectified and smoothed and is thus proportional to the mean alternating component in the output signal of the weighing machine (10, 9, 50) and is fed by way of a squaring unit (17, 28, 37, 58) to a computer (18, 28, 38 ... 41, 58), wherein a corrected output signal (m') is calculated in the computer (18, 28, 38 ... 41, 58) from the signal of the low-pass filter (12, 22, 52) and from the signal of the squaring unit (17, 28, 37, 58).

**2.** Electronic weighing machine according to claim 1, **characterised in that** the signal dependent on the amplitude of the vibrations is determined from the output signal of the weighing machine (10).

**3.** Electronic weighing machine according to claim 1, which operates according to the principle of electromagnetic force compensation, **characterised in that** the signal dependent on the amplitude of the vibrations is derived from the output signal of the position indicator (3) of the regulating circuit of the electromagnetic force compensation.

**4.** Electronic weighing machine according to claim 1, **characterised in that** the weighing machine (50) contains an integrated acceleration sensor (51) and that the signal dependent on the amplitude of the vibrations is derived from the output signal of the acceleration sensor (51).

**5.** Electronic weighing machine according to one of claims 1 to 4, **characterised in that** the computer (18, 28, 38 ... 41, 58) can reproduce a non-linear characteristic curve.

**6.** Electronic weighing machine according to one of claims 1 to 4, **characterised in that** the computer (18, 28, 38 ... 41, 58) can reproduce a frequency-dependent characteristic curve.

**7.** Electronic weighing machine according to one of claims 1 to 6, **characterised in that** the signal dependent on the amplitude of the vibrations is broken down into several frequency ranges (band filter 30 ... 32) and different characteristic curves are assigned to the respective frequency ranges.

**8.** Electronic weighing machine according to one of claims 5 to 7, **characterised in that** the characteristic curve or curves is or are additionally influenced by the output signal of the filter with low-pass characteristic (12, 22, 52).

**9.** Electronic weighing machine according to one of claims 1 to 8, **characterised in that** all filters (12, 13, 22, 30, 31, 32, 52, 53) are digital filters and are realised within the digital signal processing unit (19) and that also the computer (18, 28, 38 ... 41, 58) is realised by digital components or program parts within the digital signal processing unit (19).

**Revendications**

1. Capteur électronique de pesée (10, 9, 50) avec une unité digitale de traitement des signaux (19) qui comprend au moins un filtre ayant des caractéristiques passe-bas (12, 22, 52) à l'aide duquel la partie égale (m) est déterminée à partir du signal de sortie du capteur de pesée (10, 9, 50) et le résultat de la pesée en est déduit, **caractérisé en ce que** l'unité digitale de traitement des signaux (19) détermine en outre au moyen d'un filtre passe-haut (13, 53) un signal dépendant de l'amplitude des oscillations du capteur de pesée (10, 9, 50), lequel est redressé et est égalisé en étant ainsi proportionnel à la partie alternée moyenne dans le signal de sortie du capteur de pesée (10, 9, 50), et l'amène par l'intermédiaire d'une unité de transfert quadratique (17, 28, 37, 58) à un calculateur (18, 28, 38 ... 41, 58), un signal de sortie corrigé (m') étant calculé dans le calculateur (18, 28, 38 ... 41, 58) à partir du signal du filtre passe-bas (12, 22, 52) et du signal de l'unité de transfert quadratique (17, 28, 37, 58).

2. Capteur électronique de pesée selon la revendication 1, **caractérisé en ce que** le signal dépendant de l'amplitude des oscillations est déterminé à partir du signal de sortie du capteur de pesée (10).

3. Capteur électronique de pesée selon la revendication 1 travaillant selon le principe de la compensation électromagnétique des forces, **caractérisé en ce que** le signal dépendant de l'amplitude des oscillations est issu du signal de sortie de l'indicateur de position (3) du circuit de régulation de la compensation électromagnétique des forces.

4. Capteur électronique de pesée selon la revendication 1, **caractérisé en ce que** le capteur de pesée (50) comprend un détecteur d'accélération intégré (51) et **en ce que** le signal dépendant de l'amplitude des oscillations est issu du signal de sortie du détecteur d'accélération (51).

5. Capteur électronique de pesée selon l'une quelconque des revendications 1 à 4, **caractérisé en ce que** le calculateur (18, 28, 38 ... 41, 58) peut reproduire une courbe caractéristique non linéaire.

6. Capteur électronique de pesée selon l'une quelconque des revendications 1 à 5, **caractérisé en ce que** le calculateur (18, 28, 38 ... 41, 58) peut reproduire une courbe caractéristique dépendant de la fréquence.

7. Capteur électronique de pesée selon l'une quelconque des revendications 1 à 6, **caractérisé en ce que** le signal dépendant de l'amplitude des oscillations est décomposé en plusieurs plages de fréquences (filtre de bande 30... 32) et **en ce que** des courbes caractéristiques différentes sont attribuées aux plages de fréquences respectives.

8. Capteur électronique de pesée selon l'une quelconque des revendications 5 à 7, **caractérisé en ce que** la ou les courbes caractéristiques est/sont influencée(s) en outre par le signal de sortie du filtre ayant des caractéristiques passe-bas (12, 22, 52).

9. Capteur électronique de pesée selon l'une quelconque des revendications 1 à 8, **caractérisé en ce que** tous les filtres (12, 13, 22, 30, 31, 32, 52, 53) sont des filtres digitaux et sont réalisés à l'intérieur de l'unité digitale de traitement des signaux (19) et **en ce que** le calculateur (18, 28, 38 ... 41, 58) est également réalisé par des composants ou des parties de programmes digitaux à l'intérieur de l'unité digitale de traitement des signaux (19).

**Ausgangssignal**

FIG.1

FIG.2

FIG.3

FIG.4

FIG.5

Gewichtung

$x^2$

$x^2$

$x^2$

m

m'

FIG.6

$\approx$

$\approx$

00,000 g

m

m'

x